# EUROPÄISCHE PATENTSCHRIFT

(11) **EP 1 989 369 B1**
(45) Veröffentlichungstag und Bekanntmachung des Hinweises auf die Patenterteilung: **08.06.2011**
(21) Anmeldenummer: 07711653.1
(22) Anmeldetag: 23.02.2007
(51) Int. Cl.: E04F 15/02, E01C 5/20, F16B 5/00

(54) **STRUKTURPLATTE**
STRUCTURED PLATE
PLAQUE STRUCTURELLE

(30) Priorität: 24.02.2006 DE 102006008792
(43) Veröffentlichungstag der Anmeldung: 12.11.2008
(73) Patentinhaber: Isaria Corporate Design AG, 85667 Oberpframmern (DE); Gerg Products GmbH, 83104 Hohenthann (DE)
(72) Erfinder: NEUPERT, Wolfgang, 85521 Riemerling (DE); MUES, Andreas, 83104 Tuntenhausen (DE)
(74) Vertreter: Ganahl, Bernhard
(86) Internationale Anmeldenummer: PCT/EP2007/001590
(87) Internationale Veröffentlichungsnummer: WO 2007/098892

(56) Entgegenhaltungen:
- EP-A- 1 120 515
- EP-A1- 0 441 728
- DE-A1- 10 253 553
- DE-U1- 20 107 338
- US-A1- 2002 189 176

## Beschreibung

Die Erfindung betrifft eine Strukturplatte aus Kunststoff zur Aufnahme eines Bodenbelags, insbesondere zur Präsentation von Fahrzeugen, zum Erzeugen von Verkaufsflächen, Messeständen und dergleichen.

Es ist bekannt, zur Präsentation von Kraftfahrzeugen in Verkaufsräumen, bei Messen oder ähnlichen flachen Podesten aus einzelnen Platten bzw. Fliesenelementen anzuordnen. Beim Stand der Technik ist von Nachteil, dass diese Platten- bzw. Fliesenelemente beim Befahren durch Kraftfahrzeuge oft auseinandergedrückt werden, da die Vortriebskraft der Räder die Platten auseinander zieht bzw. auseinander drückt. Insbesondere, bei kleinflächigen Platten (z.B. 1 m²) besteht die Gefahr, dass zwischen den belasteten und nicht belasteten Platten Höhenunterschiede entstehen, die zu Stolperstellen führen.

Einerseits sollen diese Platten einfach und schnell zu den Podesten zusammengeschoben werden können. Andererseits ist eine Rutschsicherung notwendig, um ein Verschieben der gesamten Podeste zu verhindern. Diese beiden Anforderungen stehen im Gegensatz, denn bei herkömmlichen Verbindungsstrukturen erschwert eine Rutschsicherung den Zusammenbau.

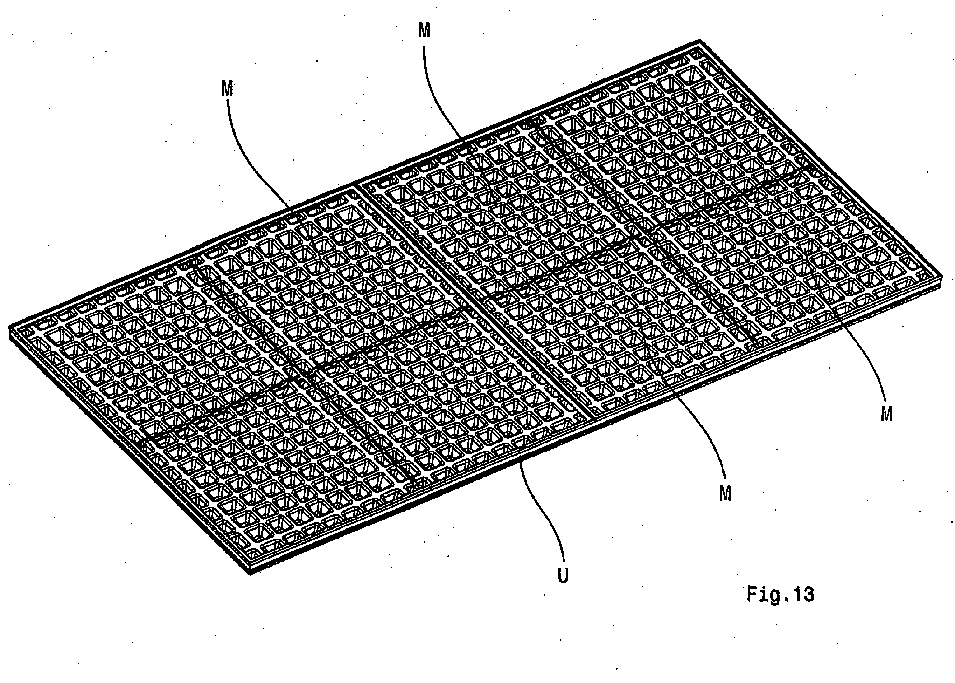

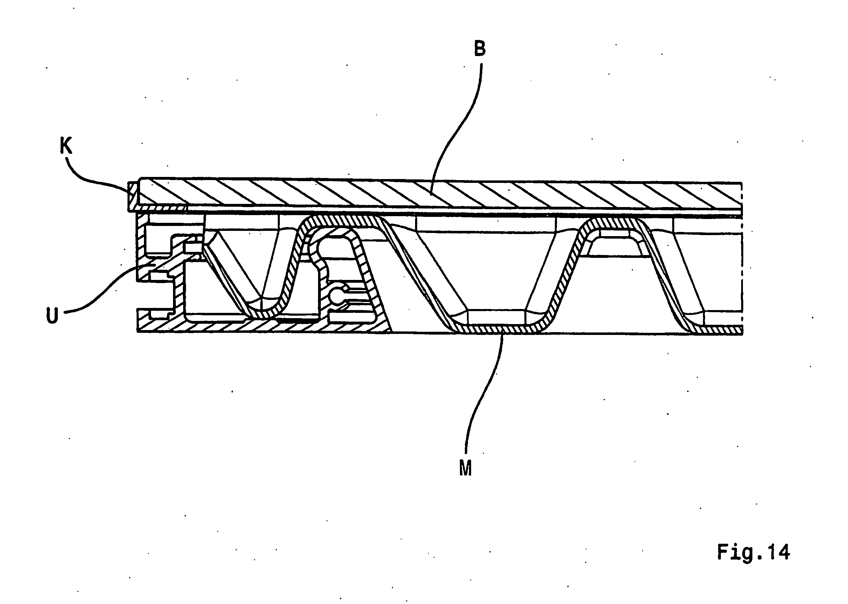

Bei einem internen Stand der Technik der Arimelder (Figuren 13, 14) werden vier spritzgepresste Module M mit Stirnseiten aneinander angeordnet und mit einem Umfangsprofil U beispielsweise aus einem Strang gepressten Aluminiumprofil umgeben. Anschließend wird auf eine derart erhaltene Fliese F eine Belagplatte B aufgebracht, wobei im Randbereich oberhalb des Umfangprofils U ein Gummikeder K zwischen dem Aluminiumprofil bzw. Umfangsprofil U und der Belagplatte B angeordnet wird. Die Aluminiumprofile werden mit geeigneten Mitteln aneinander befestigt.

Derartige Fliesen haben sich bezüglich ihrer mechanischen Eigenschaften bewährt, sind jedoch relativ aufwändig in der Herstellung.

Aus der EP 0 441 728 B1 bzw. der DE 691 00 069 T2 geht eine Kunststofffliese für Gebäudeterrassen hervor, die einen Strukturkörper aus Kunststoff aufweist, an dem an der Oberseite eine Umrandung zur Aufnahme eines Oberflächenbelages vorgesehen ist. An den Seitenflächen des Strukturkörpers sind Mittel zum Zusammenfügen benachbarter Kunststofffliesen vorgesehen.

Aus der WO 92/20885 und der DE 201 07 338 U1 gehen jeweils Bodenbelagsysteme hervor, die Kunststoffplatten umfassen. Die Kunststoffplatten werden mit separat ausgebildeten Verbindungselementen verbunden, die in entsprechende Ausnehmungen in die Kunststoffplatten eingefügt werden.

Die US 2002/0189176 A1 offenbart Kunststofffliesen mit einer netzartigen Verstärkungsstruktur.

Aus der WO 99/66151 geht ein Parkettsystem hervor, bei dem die einzelnen Parkettplatten eine Nut- und Federverbindung aufweisen. An eine jede Parkettplatte ist ein Aluminiumprofil befestigt, das einen Vorsprung aufweist, der in eine benachbarte Parkettplatte eingreifen kann, um zwei angrenzende Parkettplatten gegen Rutschen zu sichern.

Die EP 0 121 915 A2 offenbart einen Dübel zum Verbinden von Holzplatten. Der Dübel ist im Querschnitt T-förmig ausgebildet, wobei ein senkrecht nach oben abstehender Abschnitt eine Art Fugenmaterial zwischen zwei angrenzenden Bodenplatten bildet.

Aus der DE 102 53 553 A1 geht ein schwimmend verlegbares Fußbodenelement hervor. Das Fußbodenelement ist zweilagig, mit einer Sichtlage und einer Trägerlage ausgebildet, wobei die Lagen mittels eines elastischen Klebstoffs miteinander verbunden sind. Der Klebstoff wird von einer Vertiefung in der Trägerlage aufgenommen. Das Fußbodenelement weist umlaufend eine Nut-/Federprofilierung auf. Die Nut erstreckt sich über zwei benachbarte Seiten und die Feder erstreckt sich über die beiden ich anderen Seiten des Fußbodenelements. Die Feder ist integral mit der aus Kunststoff bestehenden Trägerlage ausgebildet. Die Fußbodenelemente sind derart ausgebildet, dass sie miteinander randverclipsbar sind. Clipselemente sind in der Nut-/Federprofilierung und in der Trägerlage angeordnet Die H-förmig ausgebildeten Clipselemente weisen jeweils zwei Mutterteile zum Verbinden zweier Fußbodenelemente auf. Am Fußbodenelement ist vom Boden des Elements bis zur oberen Kante der Nut-/Federprofilierung das entsprechende Vaterteil ausgebildet.

In der EP 1 120 515 A1 sind Bodenplatten mit daran angeordneten Verbindungselementen beschrieben. An der Unterseite einer Bodenplatte ist ein Verbindungselement lösbar angeordnet. Das Verbindungselement umfasst eine erste Lippe und einen dieser ersten Lippe gegenüberliegenden Haken über den das Verbindungselement mit der Bodenplatte verbunden wird. Weiterhin weist die Bodenplatte eine entlang einer Längsseite ausgebildete Nut auf. Beim Verbinden zweier Bodenplatten greift das Verbindungselement in eine auf der unteren Seite der zweiten Bodenplatte nach unten offen ausgebildete Nut ein. Der Bügel stellt die horizontale Fixierung zweier Bodenplatten sicher. Zur vertikalen Fixierung dient die entlang der Bodenplatte längs ausgebildete Nut sowie eine entlang der Bodenplatte längs ausgebildete Feder die in diese Nut eingreift. Die Bodenplatten und weisen somit zwei vertikal versetzte Verbindungselemente auf, um ein Verrutschen in horizontaler und vertikaler Richtung zu verhindern.

Aufgabe der Erfindung ist es, eine Strukturplatte zum Herstellen von Podesten zu schaffen, die einfach, schnell und kostengünstig herstellbar sind, sich zu Baugruppen hoher Stabilität und Beständigkeit zusammenfügen lassen und günstig in der Herstellung sind. Die Aufgabe wird mit einer Strukturplatte mit den Merkmalen des Anspruchs 1 gelöst. Vorteilhafte Weiterbildungen sind in den Unteransprüchen angegeben.

Die erfindungsgemäßen Strukturplatten sind spritzgepresste flach plattenartige Bauteile die eine Tragstruktur besitzen, welche außenseitig von einem umlaufenden Rahmen begrenzt wird. Der Rahmen ist ein steifes Kunststoffprofil, welches mit der Tragstruktur einstückig und insbesondere als Spritzgussteil ausgebildet ist.

Das Spritzgussteil ausbildende Kunststoffmaterial ist vorzugsweise ein Thermoplast und insbesondere ein faserverstärkter Thermoplast.

Der Rahmen umfasst außenseitig eine Nivelliernut für eine Nivellierschiene sowie außenunterseitig Aufnahmeöffnungen für separat von der Strukturplatte ausgebildete Verbindungselemente. Die Nivelliernut und die Aufnahmeöffnungen sind vertikal versetzt in unterschiedlichen Ebenen angeordnet. Die Toleranz, mit welcher ein Nivellierprofil bzw. eine Nivellierschiene in die korrespondierende Nivelliemut eingefügt wird, beträgt lediglich 0,2 mm und vorzugsweise nicht mehr als 0,1 mm.

Durch diese Kombination von Nivelliemut und Aufnahmeöffnungen wird ein schubfester Verbund von Strukturplatten erzielt, da benachbarte Strukturplatten sowohl in Vertikalrichtung als auch in Horizontalrichtung zueinander fixiert sind. Es gibt praktisch kein Spiel zwischen benachbarten Strukturplatten, so dass eine auf eine einzelne Strukturplatte eingeleitete Kraft auf mehrere zusammenhängende Strukturplatten verteilt wird. Befindet sich eine rutschhemmende Schicht unter einem solchen Verbund, dann ist durch die gleichmäßige Krafteinleitung in den Untergrund sichergestellt, dass der Verbund nicht verrutscht Eine solche rutschhemmende Schicht kann separat vom Verbund vorgesehen sein oder unmittelbar an der Unterseite der Strukturplatten und/oder der Verbindungselemente ausgebildet sein.

Dadurch, dass die Strukturplatten sowohl in Vertikalrichtung als auch in Horizontalrichtung zueinander fixiert sind, kann mit dem erfindungsgemäßen Verbund eine Unebenheit im Untergrund ausgeglichen werden. Die erfindungsgemäßen Strukturplatten eignen sich nicht nur als flache Podeste für Messen und Ausstellungsräume, sondern auch zur Altbausanierung. Mit diesen Strukturbauteilen kann einfach und schnell ein ebenflächiger Boden realisiert werden, wobei die Strukturbauteile sowohl wärme- als auch schalldämmend wirken.

Die Verbindungselemente sind Doppel-T-Elemente bzw. H-Elemente, die von einer Seite zur anderen Seite sich konisch verjüngend ausgebildet sind. Zwei aneinandergelegte Strukturplatten ergänzen sich bezüglich ihrer Aufnahmeöffnungen für die Verbindungselemente derart, dass ein Verbindungselement in zwei benachbarte Verbindungsöffnungen der Kunststoffrahmen eingesetzt werden kann. Sowohl die Öffnungen als auch die Verbindungselemente sind sich konisch verjüngend zu einer Seite hin ausgebildet bzw. die Öffnungen verjüngen sich von unten nach oben bezogen auf den Rahmen der Strukturplatte, so dass ein eingestecktes Verbindungselement benachbarte Strukturplatten aufeinander zuzieht. Hierdurch kann ein schubfester Verbund herbeigeführt werden. Die Strukturplatten haben wie bereits ausgeführt, eine flach plattenartige Form mit einem quadratischen, rechteckigen, rautenförmigen oder dreieckigen Umfang. Die Form der Platten ist jeweils so bemessen, dass eine Mehrzahl von Platten zu einer einheitlichen Fläche kombiniert werden können.

Auf eine Kombination von beispielsweise vier Strukturplatten, die gemeinsam eine Fliese ergeben, kann eine gemeinsame Platte aufgelegt werden, die aus Glas, Kunststoff oder Metall besteht.

Um eine saubere und dichte Fuge zu erzielen sind an einer Oberkante der umlaufenden Kunststoffprofile Keder einstückig angespritzt, so dass zwei gegenüberliegende Gummikeder die sich bildende Fuge zwischen den Strukturplatten dicht verschließen und die Fugenbreite exakt definieren.

Die einzelnen Strukturplatten haben beispielsweise eine Kantenlänge von 400 mm bis 600 mm bei einer Höhe von 27 mm bis 33 mm zuzüglich einer Belag- bzw. Plattenhöhe von 6 mm bis 15 mm.

Die Tragstruktur besteht beispielsweise aus sich von einer Mitte der Platte strahlenförmig nach außen erstreckenden Tragstegen die ober- und unterseitig versetzt zueinander Tragflächen besitzen, die über schräg verlaufende zusätzliche Stege verbunden sind. Die Breite bzw. Größe der Tragflächen kann nach der Art der zu erwartenden Belastungen vergrößert oder verkleinert werden, wobei die Tragflächen eines Steges durch einen längs verlaufenden vertikalen Mittelsteg verbunden sind. Um eine Verschiebung der strahlenförmigen Stege zu verhindern können ein oder mehrere konzentrisch um den Mittelpunkt der Platte angeordnete Ringstege vorhanden sein.

Bei der Erfindung ist von Vorteil, dass die erfindungsgemäße Strukturplatte einstückig ausgebildet ist, wobei sowohl der Rahmen als auch die Tragstruktur, die vom Rahmen umgeben wird, in einem Werkzeug hergestellt werden kann.

Darüber hinaus ist von Vorteil, dass mittels der erfindungsgemäßen Verbindungselemente und Nivellierschienen einerseits ein fester Zusammenhalt der Strukturplatten bzw. Fliesen untereinander erreicht wird und zudem ein sauberes Fugenbild und eine saubere Nivellierung der Platten zueinander besteht. Durch den Keder werden die Fugen geschlossen, ohne dass in einem zusätzlichen Arbeitsschritt Gummikeder eingelegt werden müssten, die zudem das Auflegen der Platte erschweren würden.

Die Erfindung wird beispielhaft anhand einer Zeichnung erläutert. Es zeigen dabei:
- Figur 1:: eine perspektivische Draufsicht auf ein erstes Ausführungsbeispiel einer erfindungsgemäßen Strukturplatte von oben;
- Figur 2:: eine perspektivische Draufsicht auf die Strukturplatte aus Figur 1 in einer Ansicht von unten;

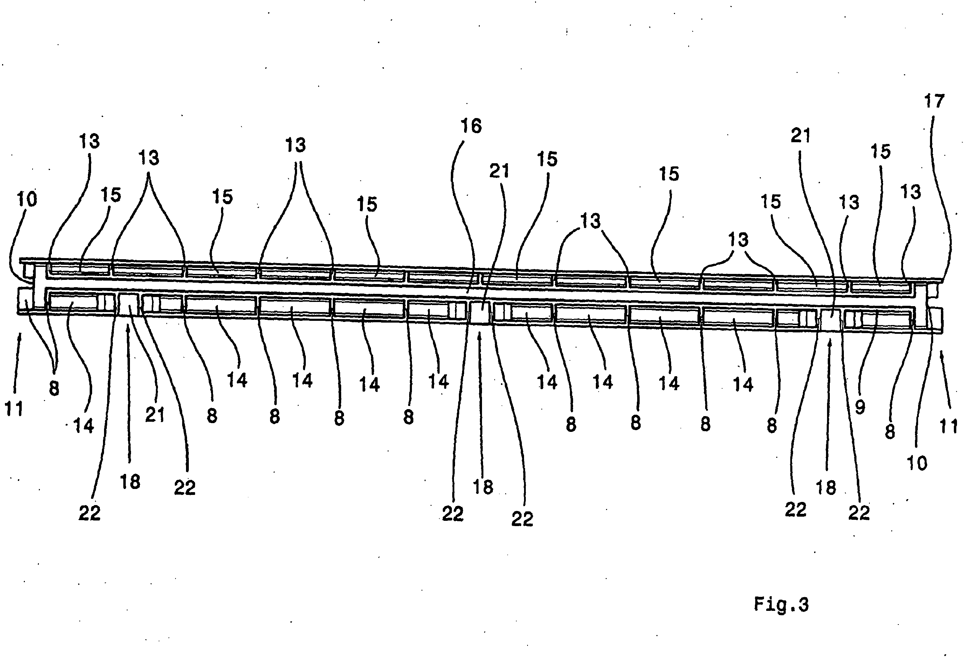

- Figur 3:: eine Seitenansicht der Strukturplatte aus Figur 1;
- Figur 4:: eine Draufsicht auf eine Fliese aus vier Strukturplatten gemäß Figur 1;
- Figur 5:: eine Schnittansicht des Kantenbereichs des umlaufenden Profils der Strukturplatte aus Figur 1;
- Figur 6:: eine Draufsicht auf einen Kantenbereich zweier aneinander stoßender Strukturplatten gemäß Figur 1;
- Figur 7:: das erfindungsgemäße Verbindungselement in einer Draufsicht;
- Figur 8:: das Verbindungselement in einer perspektivischen Ansicht;
- Figur 9:: das Verbindungselement in in einem Eckbereich eingesteckten Zustand;
- Figur 10:: die Kante des Kunststoffprofils in einem Schnitt mit einem umlaufenden Abschlussprofil für ein aus den Strukturplatten gebildetes Podest;
- Figur 11:: die Anordnung nach Figur 10 im Bereich eines Verbindungselements;
- Figur 12:: die Anordnung nach Figur 11 mit einem angesteckten Wandelement;
- Figur 13:: eine perspektivische Ansicht von Strukturplatten nach dem Stand der Technik;
- Figur 14:: eine Strukturplatte nach dem Stand der Technik in einer geschnittenen An- sicht;
- Figur 15:: eine perspektivische Draufsicht auf ein zweites Ausführungsbeispiel einer erfindungsgemäßen Strukturplatte von oben;
- Figur 16:: eine perspektivische Draufsicht auf die Strukturplatte aus Figur 15 in einer Ansicht von unten;
- Figur 17:: eine Seitenansicht der Strukturplatte aus Figur 15.

Die erfindungsgemäße Strukturplatte 1 ist ein Spritzgussteil aus einem thermoplastischen Kunststoff wie Polyamid, Polyethen oder Polypropen und insbesondere einem faserverstärkten Thermoplast.

Die Strukturplatte 1 ist flach plattenartig ausgebildet und besitzt eine eckige insbesondere viereckige, quadratische, rautenförmige, dreieckige oder sechseckige Fläche. Im Bereich der Außenkanten der flach plattenartigen Strukturplatte 1 besitzt die Strukturplatte 1 ein profiliertes, umlaufendes Rahmenelement 2. Das Rahmenelement 2 weist eine im Wesentlichen vertikal verlaufende Rahmenwandung 3 auf und an einer oberen Längskante 4 erstreckt sich eine Deckenwandung 5 senkrecht zur Rahmenwandung 3 nach außen. Entlang einer unteren Längskante 6 erstreckt sich eine Bodenwandung 7 senkrecht zur Rahmenwandung 3 sowohl nach außen als auch nach innen.

Die Deckenwandung 5 und die Bodenwandung 7 erstrecken sich dabei um den gleichen Betrag über die Rahmenwandung 3 nach außen, so dass sie an der Außenseite vertikal fluchten.

Außenseitig der Rahmenwandung 3 erstrecken sich von der Bodenwandung 7 und außenseitig mit der Bodenwandung 7 fluchtend Profilstege 8 auf die Deckenwandung 5 zu bis unterhalb der Vertikalmitte der Höhe des Rahmenelements 2. Die Profilstege 8 werden oberseitig durch eine untere Profilquerwandung 9 verbunden, die parallel zur Bodenwandung 7 und zur Deckenwandung 5 verläuft. Die untere Profilquerwandung 9 bzw. die Profilstege 8 sind dabei von Ecken 10, die durch die Rähmenwandungen 3 gebildet werden, ein Stück beabstandet, so dass die Ecken 10 der Rahmenwandungen 3 und damit die Eckbereiche 11 der Strukturplatten 1 von den Profilstegen 8 bzw. der unteren Profilquerwandung 9 freigespart sind.

Vertikal ein Stück beabstandet und parallel zur unteren Profilquerwandung 9 verlaufend ist eine obere Profilquerwandung 12 vorhanden. Von der oberen Profilquerwandung 12 gehen Profilstege 13 aus, die vertikal mit den Profilstegen 8 fluchtend sich von der oberen Profilquerwandung 12 zur Unterseite der Deckenwandung 5 erstrecken. Die Profilstege 8 und die untere Profilquerwandung 9 sowie die Rahmenwandung 3 bilden nach außen weisende untere Gefache 14 des Rahmenelements 2.

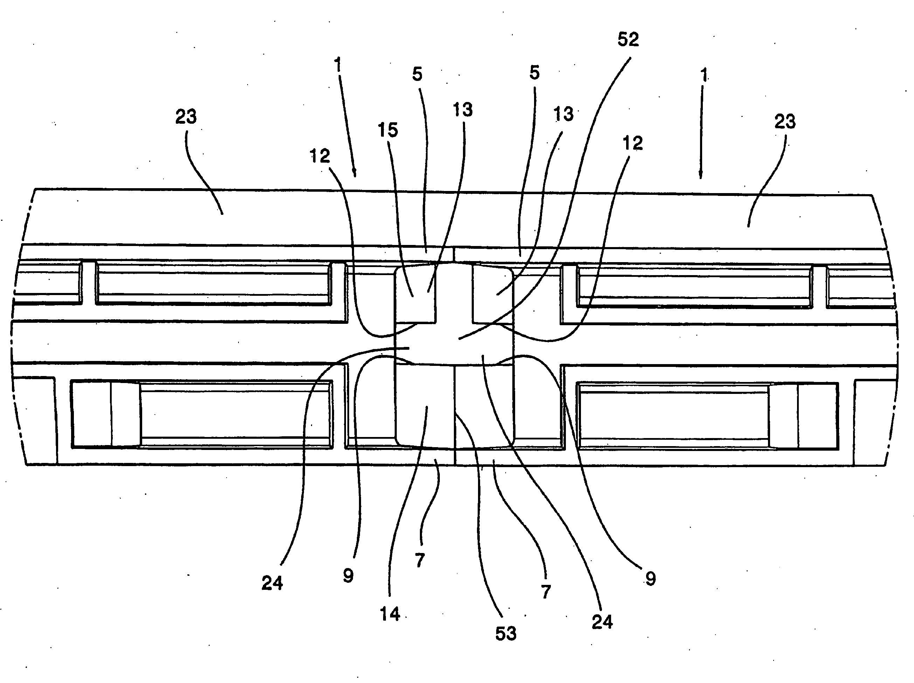

Die obere Profilquerwandung 12, die oberen Profilstege 13 und die Rahmenwandung 3 bilden nach außen weisende obere Gefache 15. Die untere Profilquerwandung 9 und die obere Profilquerwandung 12 begrenzen zwischen sich einen Schlitz 16. Die obere Profilquerwandung 12 sowie die Profilstege 13 sind mit ihren nach außen weisenden Kanten gegenüber einer nach außen weisenden Kante 17 der Deckenwandung 5 ein Stück nach innen versetzt angeordnet, so dass zwischen den nach außen weisenden Kanten der oberen Profilquerwandung 12 und der Profilstege 13 und der nach außen weisenden Kante 17 der Deckenwandung 5 ein Freiraum besteht. Dieser Freiraum und der Schlitz 16, in den der Freiraum mündet, bilden eine L-förmige Nivelliemut 24 (Fig. 6).

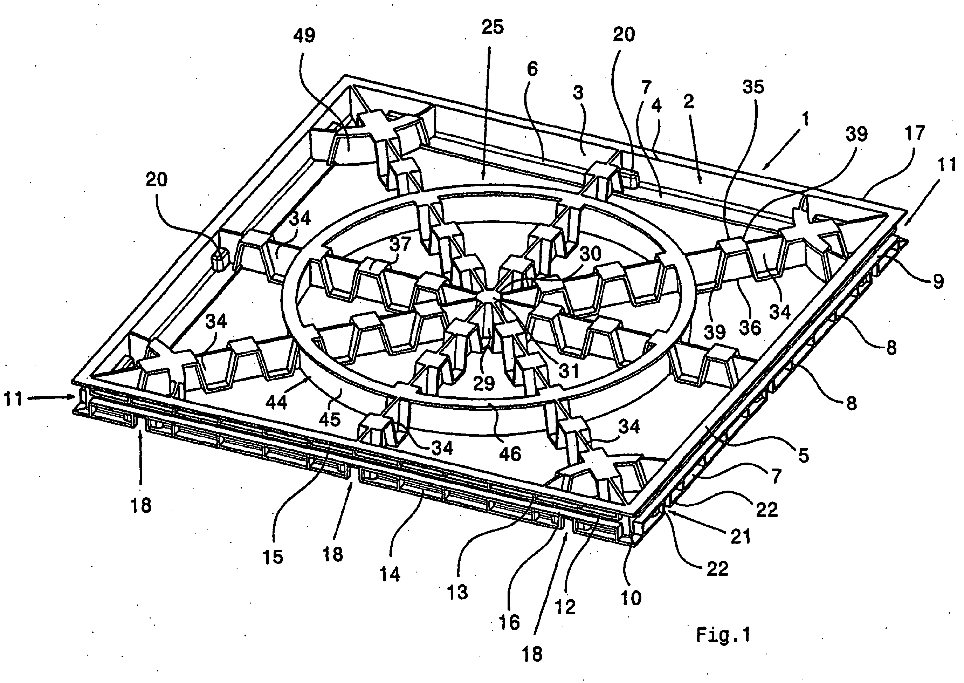

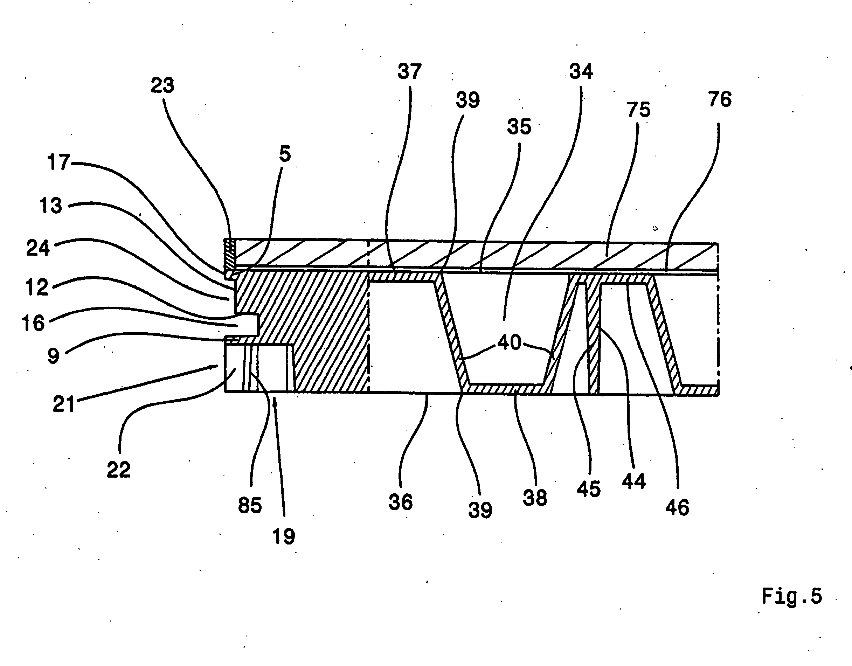

Das Rahmenelement 2 verfügt entlang seiner Längserstreckung über eine Mehrzahl von Verbindungsaufnahmeeinrichtungen 18. Beispielsweise sind von einem Eckbereich 11 zu einem benachbarten Eckbereich 11 drei Verbindungsaufnahmeeinrichtungen 18 vorhanden. An jeder Außenkante ist zumindest eine Verbindungsaufnahmeeinrichtung 18 vorgesehen. Die Verbindungsaufnahmeeinrichtung 18 weist eine aus einer in der Bodenwandung 7 vorhandene Einstecköffnung 19 auf, die in der Draufsicht etwa T-förmig ausgebildet ist, wobei sich von der Einstecköffnung 19 eine Haube 20 (Fig. 1) oder Aussparung 20 nach oben erstreckt (Fig. 5). Die Haube 20 verjüngt sich dabei nach oben allseitig und schließt auf Höhe der unteren Profilquerwandung 9 ab, wobei die Haube 20 bezüglich der Rahmenwandung 3 bezüglich ihrer Längserstreckung axial verläuft und ihre Quermitte in etwa dem Verlauf der Rahmenwandung 3 entspricht. Zum Äußeren des Rahmenelements 2 hin öffnet sich die Haube 20 in etwa im Bereich ihrer Längsmitte mit einer torartigen Öffnung 21, welche durch zwei die Öffnung 21 begrenzende Stege 22 und die untere Profilquerwandung 9 gebildet wird. Die Stege 22 schließen außenseitig mit der Bodenwandung 7 und der unteren Profilquerwandung 9 ab, wobei die Stege 22 von der Bodenwandung 7 zur unteren Profilquerwandung 9 ebenfalls konvergierend ausgebildet sein können. Die Öffnung 21 mündet in die Einstecköffnung 19 bzw. die Einstecköffnung 19 und die Öffnung 21 bilden eine gemeinsame über Eck verlaufende Öffnung.

Die Verbindungsaufnahmeeinrichtung 18 bildet somit mit der Haube 20 zur Aufnahme eines Längssteges 58 bzw. der Öffnung 21 zur Aufnahme eines Quersteges 59 eines Verbindungselementes 54 eine Ausnehmung bzw. Aussparung mit hinterschnittenen Bereich, in welche das Verbindungselement 54 formschlüssig eingreifen kann, so dass zwei Strukturplatten 1 mit den Rahmenelementen 2 auf Stoß verbunden sind.

Da an jeder Außenkante zumindest eine Verbindungsaufnahmeeinrichtung 18 zum Aufnehmen jeweils eines der separat ausgebildeten Verbindungselemente 54 vorgesehen ist, kann eine erfindungsgemäße Strukturplatte 1 einfach an allen Außenkanten mit weiteren Strukturplatten verbunden werden. Da die Verbindungselemente 54 von der Unterseite der Strukturplatte 1 in diese eingeführt werden, kann eine Strukturplatte 1 in einem durch weitere Strukturplatten gebildeten Eckbereich einfach von oben eingesetzt werden.

Nach oben, sich vertikal mit der Außenkante der Deckenwandung 5 fluchtend und am Rahmenelement 2 umlaufend sich erstreckend, ist ein Gummikeder 23 (Figur 5) vorzugsweise einstückig durch Zweikomponentenspritztechnik angeformt.

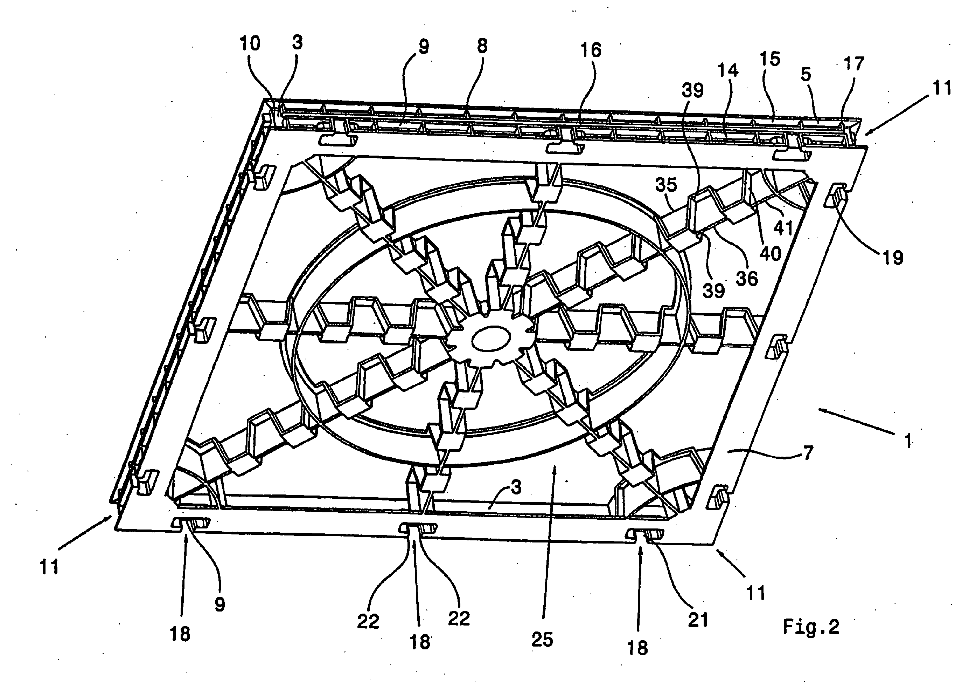

Das Rahmenelement 2 umschließt eine innerhalb des Rahmenelements 2 angeordnete Tragstruktur 25 (Fig. 1, 2). Die Tragstruktur 25 besitzt eine zentrale Säule 26, die sich vertikal erstreckt, hohl ausgebildet ist und eine entlang ihrer unteren Ringkante 27 (Figur 2) nach außen weisende Bodenwandung 28 eines sich von der Bodenwandung 28 nach oben erstreckende Mantelwandung 29 bis zu einer oberen Ringkante 30 erstreckt, wobei innerhalb der Ringkante 30 eine ebene Deckenwandung 31 vorhanden ist. Die Bodenwandung 28 fluchtet horizontal mit der Bodenwandung 7 des Rahmenelements 2 und die Deckenwandung 31 fluchtet horizontal mit der Deckenwandung 5. Von der Zentralsäule 26 gehen strahlenförmig vertikal verlaufende Tragstege 34 nach außen.

Die Tragstege 34 besitzen eine obere Längskante 35 und eine untere Längskante 36. Bei einer quadratischen Strukturplatte erstrecken sich beispielsweise acht Tragstege 34 von der Zentralsäule 26 nach außen zum Rahmenelement 2, wobei sich vier Tragstege 34 zu den Eckbereichen des Rahmenelements 2 erstrecken und im Bereich der Ecke 10 je zwei benachbarte Rahmenwandungen 3 und ein Tragsteg 34 ineinander münden und die übrigen vier Tragstege 34 von der Zentralsäule 26 zu den Längsmitten der Rahmenwandungen 3 verlaufen und dort in die Rahmenwandung 3 einmünden. Die obere Längskante 35 und die untere Längskante 36 der Tragstege 34 besitzen senkrecht zur vertikalen Erstreckung der Tragstege 34 von den Kanten 35, 36 jeweils nach außen verlaufende obere Tragflächen 37 und unteren Tragflächen 38, die sich plattenartig erstrecken (Fig. 1, 2, 5). Die quer zu den oberen Längskanten 35 bzw. unteren Längskanten 36 verlaufenden Querkanten 39 der Tragflächen 37, 38 sind mit Stegen 40 verbunden, die mit einer Längskante 41 in die Tragstege 34 münden. Die oberen Tragflächen 37 sind zu den unteren Tragflächen 38 vorzugsweise derart versetzt angeordnet, dass die Verbindungsstege 40 geneigt zur Vertikalen verlaufend ausgebildet sind. Die Verbindungsstege 40, die oberen bzw. unteren Tragflächen 37, 38 sowie die Tragstege 34 bilden ein Tragwerk aus mit einem jeweils beidseitig des Tragstegs 34 verlaufenden Eckwellenmuster.

Um die Tragstruktur 25 auszusteifen, können ein oder mehrere Ringstege 44 konzentrisch um die Zentralsäule 26 angeordnet sein, wobei sich der Ringsteg 44 mit einer Ringwandung 45 die eine Höhe besitzt, die der Höhe der Tragstege 34 entspricht, von Tragsteg zu Tragsteg einen Ring beschreibend erstreckt und zusätzlich eine obere radial zur Ringwandung 45 verlaufende nach außen weisende Deckenwandung 46 besitzt. Die Tragstruktur aus der Zentralsäule 26, den Tragstegen 34 und den Ringstegen 44 ist einstückig ausgebildet Um die Eckbereiche 11 auszusteifen bzw. die Anbindung der Tragstege 34 in den Eckbereichen 11 an die Rahmenwandung 3 zu verbessern, können Kreissegmentstege 49 sich von benachbarten Rahmenwandungen 3 ein Kreissegment schlagend zu dem Tragsteg 34 hin und in diesen einmündend angeordnet sein, wodurch beidseitig des Tragstegs 34 Kreissektoren gebildet werden. Die Kreissegmentstege 49 münden in die Rahmenwandung 3, den nach innen weisenden Bereich der Bodenwandung 7 sowie den jeweiligen Tragsteg 34 und können oberseitig bzw. unterseitig jeweils eine Boden- bzw. Deckenwandung besitzen, die mit den Tragflächen 37, 38 fluchten. In den Bereichen, in denen Hauben 20 vorhanden sind, sind die Tragstege 34 entsprechend ausgespart.

Werden zwei Strukturplatten 1 zur Kombination zu größeren Fliesen oder Podesten aneinander gelegt (Figur 6), so bilden die Nuten 24 eine umgekehrt T-förmige Nut 52. Die Nut 52 dient der Aufnahme eines korrespondiert geformten umgekehrt T-förmigen Nivellierprofils, welches formschlüssig in die Nut 52 von den Eckbereichen 11 her einschiebbar ist und über die Stirnseiten der Gefache 14, 15 jeweils ein geringes Stück vorsteht, um bei der Demontage gegriffen und herausgezogen werden zu können. Die nicht dargestellten umgekehrt T-förmigen Profile sind beispielsweise Hartholzprofile, Stahlprofile oder stranggepresste Leichtmetallprofile. Durch das Einschieben dieser umgekehrten T-förmigen Profile werden die benachbarten Strukturplatten 1 im Bereich einer Fuge 53 vertikal zueinander fixiert.

Die Gummikeder 23, die Deckenwandung 5, die Bodenwandung 7, die Profilstege 8, die untere Profilquerwandung 9 und die Bodenwandungen 7 stoßen hierbei aneinander an.

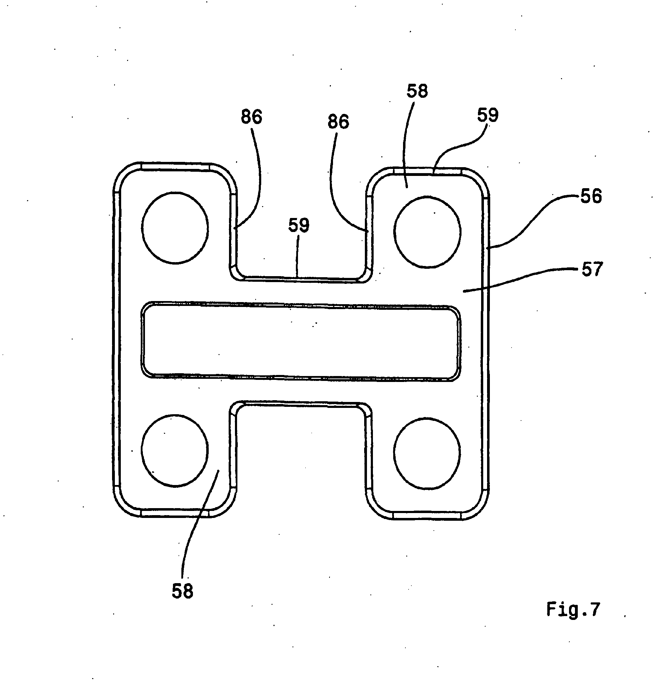

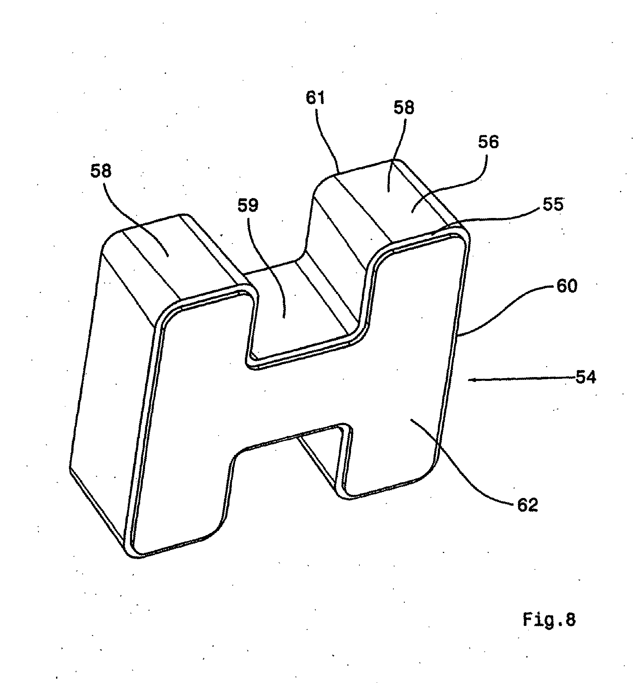

Um die Strukturplatten miteinander zu verbinden sind Verbindungselemente 54 (Figuren 7, 8, 9) vorhanden. Die Verbindungselemente sind Doppel-T-förmige bzw. H-förmige Blöcke mit einer H-förmigen Bodenwandung 55 und einer Seitenwandung 56 sowie einer im Wesentlichen parallel zur Bodenwandung 55 verlaufenden Deckenwandung 57. Das H-förmige Verbindungselement 54 besitzt zwei Längsstege 57, die von einem Quersteg 58 verbunden werden, wobei die Längsstege 57 und der Quersteg 58 einstückig ausgebildet sind und von der Bodenwandung 55, der Seitenwandung 56 und der Deckenwandung 57 begrenzt werden. Von einer umlaufenden Außenkante 58 der Bodenwandung 55 verläuft die Seitenwandung 56 das Verbindungselement 54 verjüngend zu einer oberen Außenkante 59 der Deckenwandung 57 hin, so dass das H-förmige Verbindungselement 54 bzw. die Stege 57 und wahlweise auch der Steg 58 nach oben dünner werden.

Über die Bodenwandung 55 nach unten vorstehend und von der Außenkante 60 ggf. ein Stück nach innen versetzt kann eine Schicht 62 aus einem weichen Kunststoff oder Gummi aufgebracht angeordnet sein, um eine Rutschhemmung der Aufstandsfläche zu erzielen. Diese rutschhemmende Schicht wird vorzugsweise am separat von der Strukturplatte 1 ausgebildeten Verbindungselement vorgesehen. Grundsätzlich ist es auch möglich, eine solche rutschhemmende Schicht an der Unterseite der Strukturplatte vorzusehen. Zum Aufbringen einer solchen rutschhemmenden Schicht werden Spezialwerkzeuge benötigt, die für die kleinen Verbindungslemente 54 wesentlich einfacher und günstiger als für die große Strukturptatte 1 sind.

Von der Deckenwandung 57 her können zylindrische Ausnehmungen 63 in den Längsstegen 58 und von den Längsstegen 58 über den Quersteg 59 eine langlochförmige Ausnehmung 64 vorhanden sein, um insbesondere Gewicht zu sparen und den Materialaufwand zu verringern. Das Verbindungselement 54 ist vorzugsweise ein spritzgepresstes oder spritzgegossenes Kunststoffseil.

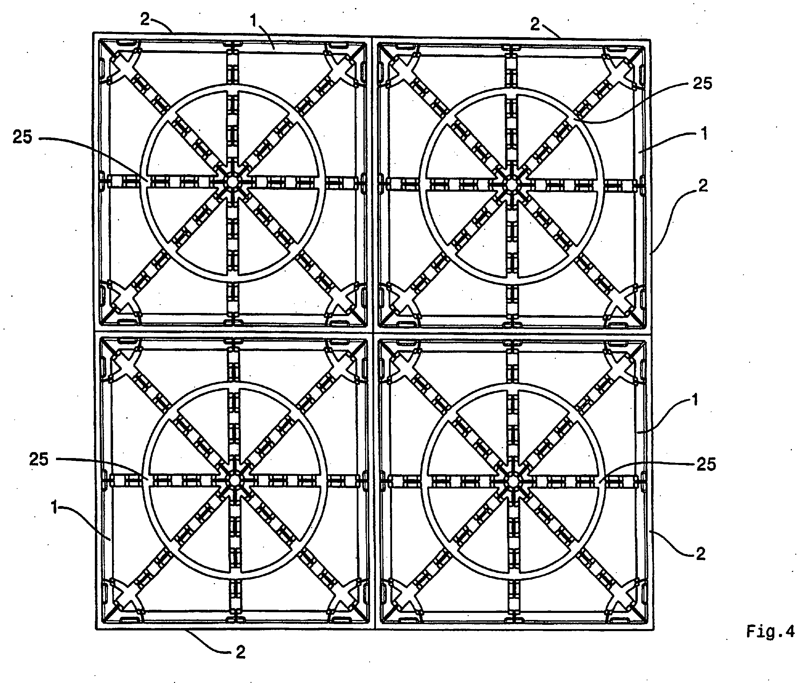

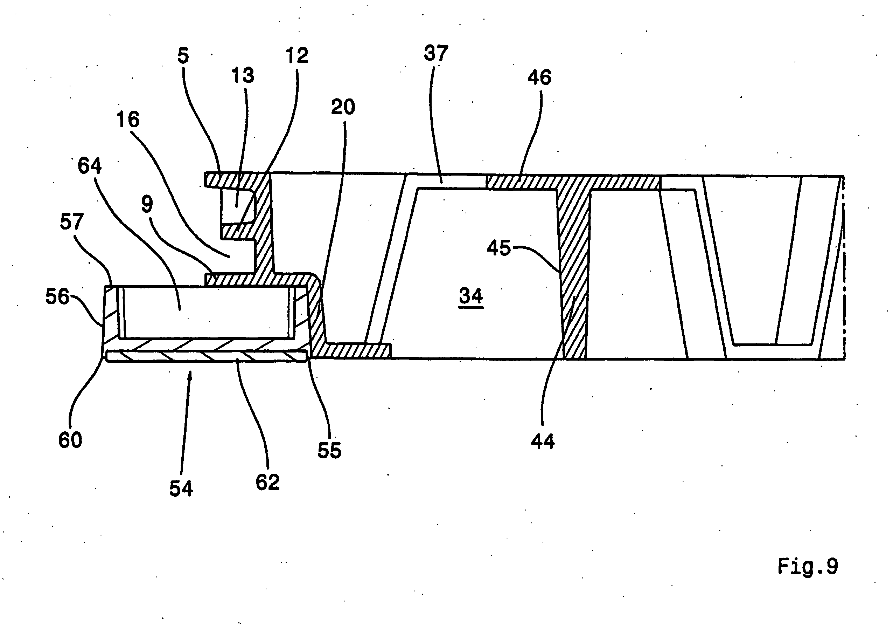

Zur Verbindung von Strukturplatten 1 aneinander werden die Strukturplatten 1, wie in Figur 9 gezeigt, aneinander gelegt und die H-förmigen Verbindungselemente 54 mit der Deckenwandung 57 voran in die Verbindungsaufnahmeeinrichtung 18 durch die Einstecköffnung 19 in die Haube 20 (Längsstege 58) bzw. die Öffnung 21 (Quersteg 59) eingesteckt. Durch die sich verjüngende Ausbildung sowohl der Hauben 20 als auch der Verbindungselemente 54, die korrespondierend zueinander ausgebildet sind, weisen die Hauben 20 jeweils eine zum Fugenbereich der Strukturplatte 1 parallel verlaufende, schräg angeordnete Einzugsfläche 85 (Fig. 5) und die Längsstege 58 der Verbindungselemente 54 eine Gegeneinzugsfläche 86 auf, so dass die Strukturplatten 1 aufeinander zugezogen werden und bei Auflasten unter Pressung aneinander gehalten werden. Die nach unten vorstehende Beschichtung, die unterseitig nicht nur über die Bodenwandung 55 sondern auch über die Bodenwandung 7 vorzugsweise leicht vorsteht, wird permanent Druck auf die Verbindungselemente 54 ausgeübt. Nachdem beispielsweise vier Strukturplatten 1 zu einer Fliese verbunden wurden (Figur 4), werden von den Seiten her die nicht gezeigten T-förmigen Profile in die Nuten 52 eingeschoben, so dass auch eine vertikale Ausrichtung und Fixierung erzielt ist neben der Verklammerung durch die H-förmigen Elemente 54.

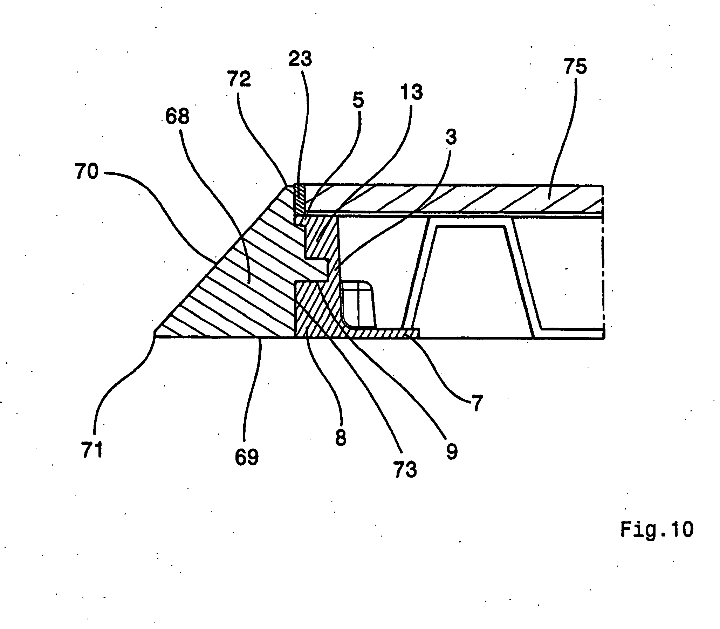

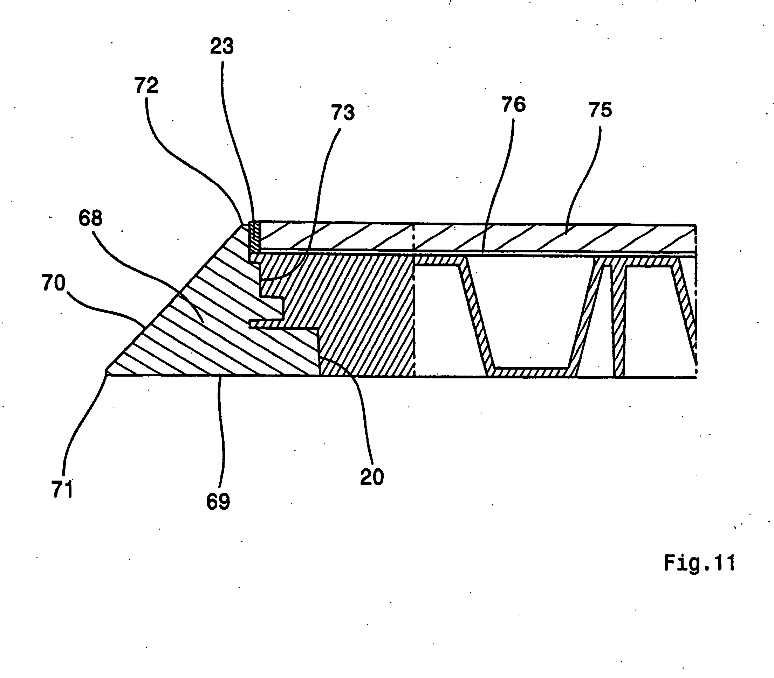

Um eine Fliese wie sie in Figur 4 gezeigt ist oder eine Mehrzahl aneinander gekoppelter Strukturplatten 1 bzw. Fliesen randseitig abzuschließen, sind Randelemente 68 (Figuren 10,11) vorhanden. Die Randelemente 68 sind leistenartig ausgebildet und besitzen eine Bodenwandung 69 sowie eine Seitenwandung 70. Die Seitenwandung 70 erstreckt sich vorzugsweise von einer äußeren Längskante 71 des Randelements 68 zu einer oberen Längskante 72 und schließt hierbei einen spitzen Winkel ein, wobei die obere Längskante 72 auf Höhe der Oberkante des Gummikeders 23 verläuft und mit diesem abschließt. Eine die Bodenwandung 69 und die Seitenwandung 70 verbindende Profilwandung 73 verläuft von der Bodenwandung 69 zur oberen Längskante 72. Die Profilwandung 73 kann über eine Kontur verfügen (Figur 10) die der Kontur des Schlitzes 16 und des Freiraums an den Profilstegen 13 bzw. der oberen Profilquerwandung 12 und der Deckenwandung 5 entspricht, so dass in einem seitlichen Schnitt gesehen ein Formschluss zwischen dem Randelement 68 und einem Rahmenelement 2 herbeigeführt wird. Hierdurch wird zudem eine vertikale Fixierung am Rahmenelement 2 durch den Eingriff der Profilwandung 73 in das Rahmenelement 2 erzielt. Im Bereich der Hauben 20 besitzt das Randelement 68 entsprechende, korrespondierende haubenartige Ausnehmungen (nicht gezeigt) um mit den H-förmigen Verbindungselementen 54 an der benachbarten Strukturplatte festgehalten zu werden.

Alternativ kann die Profilwandung 73 angegossene, halbe H-förmige Verbindungselemente umfassen, so dass das Randelement 68 von unten in die entsprechenden Hauben 20 und Öffnungen 21 einsteckbar ist. In diesem Fall besitzt das Randelement zum Einschieben des nicht gezeigten umgekehrt T-förmigen Profils eine mit dem Schlitz 16 und dem Freiraum im Bereich der Profilstege 13 korrespondierende Nut (nicht gezeigt).

Das Randelement 68 kann ein spritzgepresstes Kunststoffteil, insbesondere Weichkunststoffteil oder Gummiformteil sein. Ferner kann das Randelement als Strangpressprofil aus einem Leichtmetall oder aus anderen Metallen ausgebildet sein. Das Randprofil 68 schließt eine Mehrzahl von verbundenen Strukturplatten nach außen ab und erleichtert die Auffahrt mit Kraftfahrzeugen oder anderen mit Rädern versehenen Elementen.

In den Bereich zwischen den Gummikedem 23 und auf der Deckenwandung 5 der Strukturplatten 1 aufliegend, ist ein Bodenbelag 75 auf ein oder mehrere der Strukturplatten 1 aufgeklebt. Hierzu kann zwischen dem Bodenbelag 75 und den Deckenwandungen 5 bzw. oberen Tragflächen 37 bzw. Deckenwandungen 46 eine Zwischenschicht 76 bzw. Klebstoffschicht 76 angeordnet sein (Fig. 5, 11). Die Zwischenschicht 76 bzw. Klebstoffschicht 76 kann auch als beidseitig klebende Folienschicht ausgebildet sein, die entsprechend aufgelegt ist. Zusätzlich kann diese Folienschicht als Spiegelfolie oder Leuchtfolie ausgebildet sein, insbesondere wenn der Bodenbelag 75 aus klarsichtigen oder anderen lichtdurchlässigen Materialien wie Glas, Milchglas, Acrylglas und dergleichen besteht. An den Rahmenelementen 2 und/oder der Tragstruktur 25 können Leuchtelemente wie lichtaussendende Dioden (LED's) vorhanden sein um Leuchteffekte zu erzielen.

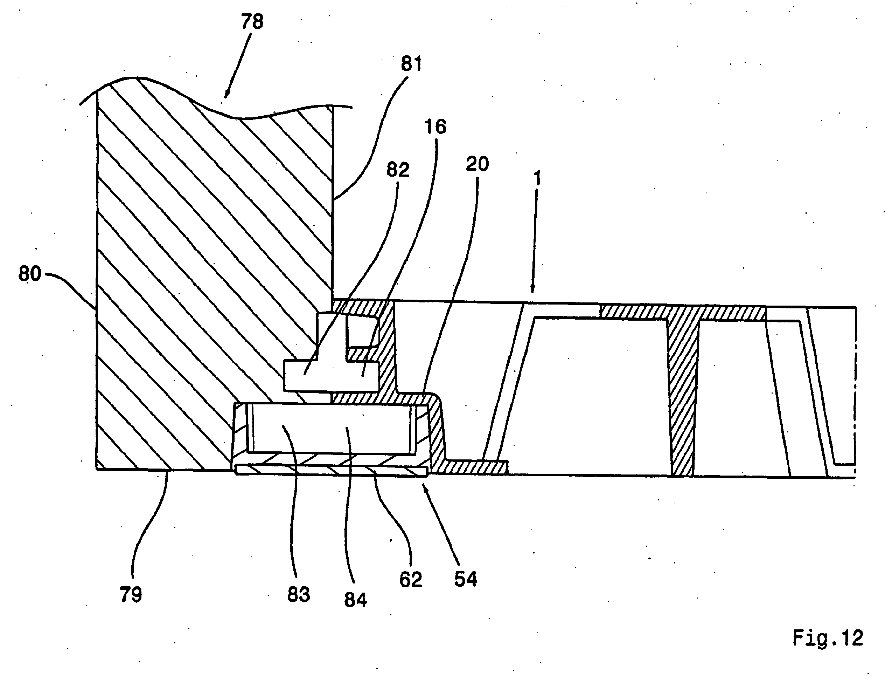

Bei einer weiteren vorteilhaften Ausführungsform der Erfindung (Figur 12) werden anstelle von Randelementen 68 Wandelemente 78 vorgesehen. Die Wandelemente 78 besitzen eine Bodenwandung 79, eine äußere Wandung 80 und eine innere Wandung 81. Die innere Wandung 81 stößt an die Deckenwandung 5 der Strukturplatte 1 an und besitzt unterhalb der Höhe der Deckenwandung 5 eine freigesparte Nut 82, die mit dem Schlitz 16 und dem Freiraum unterhalb der Deckenwandung 5 unbegrenzt von der oberen Profilquerwandung 12 und den Profilstegen 13 derart korrespondiert, dass ein umgekehrt T-förmiges Verbindungsprofil (nicht gezeigt) formschlüssig einschiebbar ist. Die umgekehrt T-förmigen Verbindungsprofile, die quer zum Wandelement 78 verlaufen, stehen an den Strukturplatten 1 ein Stück vor und ragen in das Wandelement 78 hinein. Das Wandelement 78 wird mit diesen umgekehrt T-förmigen Verbindungsprofilen verschraubt, so dass es fest an den Strukturplatten 1 fixiert ist. Auch bei dieser Ausführungsform können selbstverständlich auch andere Profilformen als umgekehrt T-förmige Verbindungsprofile verwendet werden.

Im Bereich der unteren Profilquerwandung 9 stößt die Wandung 81 wieder an das Rahmenelement 2 an und erstreckt sich von dort (nicht gezeigt) nach unten senkrecht auf die Bodenwandung 79. Im Bereich der Hauben 20 besitzt das Wandelement 78 eine korrespondierende haubenartige Ausnehmung 83 mit einer Ausnehmung 84, die in die Ausnehmung 83 mündet zur Aufnahme eines Längssteges und des halben Quersteges eines Verbindungselements 54, so dass das Wandelement 78 in vergleichbarer Weise mit Strukturplatten 1 an einer Strukturplatte 1 befestigbar ist.

Bei der Erfindung ist von Vorteil, dass einfach, schnell und kostengünstig herstellbare Strukturplatten geschaffen werden, die bei einem minimalen Materialverbrauch eine sehr hohe Tragfähigkeit besitzen. Darüber hinaus ist von Vorteil, dass durch die Kombination der Verbindungsaufnahmeeinrichtungen 18 und der Verbindungselemente 54 eine feste und zuverlässige Verklammerung der Strukturplatten 1 aneinander erzielt wird.

Durch das Vorsehen der Nivelliemuten 24 bzw. 25 oberhalb der Verbindungsaufnahmeinrichtungen 18 lassen sich die umgekehrt T-förmigen Verbindungsprofile leicht an zwei auf Stoß zueinander liegenden Strukturplatten 1 anordnen und sichern so neben den Verbindungselementen 54 eine vertikale Fixierung der Strukturplatten 1 aneinander. Bei den beiden Befestigungsmethoden für die Strukturplatten 1 ist von Vorteil, dass diese eine sehr schnelle und kostengünstige Verlegung zulassen und in Ebenen übereinander derart angeordnet sind, dass sie sich gegenseitig nicht beeinflussen. Hierdurch können die Strukturplatten in allen drei Raumebenen fest aneinander angeordnet werden.

Durch die einstückig angespritzten Gummikeder müssen keine zusätzlichen Keder wie im Stand der Technik verlegt werden und auch keine Unterfüllung der Bodenbeläge durchgeführt werden, um die Höhe des unteren L-förmigen Schenkels der üblichen Gummikeder auszugleichen. Hierdurch werden weiter Kosten und Zeit gespart.

Durch die Kombination mit den erfindungsgemäßen Wandelementen lassen sich auch im Messebau sehr schnell und zuverlässig Wandelemente und Bodenelemente fest verbinden.

Durch das Vorsehen unterschiedlicher Strukturplatten beispielsweise dreieckiger, quadratischer, rechteckiger oder rautenförmiger Strukturplatten können beliebige Formen am Boden gestaltet werden und anschließend Bodenbeläge je nach Wunsch entsprechend aufgeklebt werden. Hierdurch wird eine sehr hohe Flexibilität in der Gestaltung erreicht. Durch die Vorsehung sich verjüngender Hauben bzw. Aussparungen und der entsprechend geformten H-förmigen Verbindungselemente wird eine spielfreie Verbindung und ein spielfreies Halten aneinander der Strukturplatten erzielt, so dass auch bei Belastung sich die Großfugen zwischen den Strukturplatten 1 nicht öffnen.

Die Verbindungsaufnahmeeinrichtung 18 und die Verbindungselemente 54 müssen nicht die beispielhaft beschriebene H-Form haben, eine Doppel-T-Form, eine Doppel-Y-Form oder vergleichbare Formen, die ein Aufeinanderzuziehen der Strukturplatten 1 aufeinander zur Folge haben sind in gleicher Weise denkbar. Im einfachsten Fall können Metallklammern die Stoßfuge 53 überbrückend in Löcher der Bodenwandungen 7 eingreifen.

Anstelle eines umgekehrt T-förmigen Nivellierprofils oberhalb der Verbindungsaufnahmeeinrichtungen 18 sind auch lediglich quer verlaufende Leisten für die Nuten 24 oder dreieckförmige Leisten für entsprechend geformte Nuten denkbar.

Die Tragstege 34 der Strukturplatte 1 können auch als Hohlkanäle ausgebildet sein, um beispielsweise als Kabeldurchführung zu dienen.

Die Erfindung kann folgendermaßen kurz zusammengefaßt werden:

Die Erfindung betrifft eine Strukturplatte, ein Verbindungselement zum Verbinden einer solchen Strukturplatte, sowie eine Fliese, die aus mehreren solchen Strukturplatten zusammengesetzt ist.

Die Strukturplatte weist ein Rahmenelement auf, in dem eine nach außen weisende Nivelliemut zur Aufnahme eines Nivellierprofils ausgebildet ist. Im Rahmenelement ist auch eine Verbindungsaufnahmeeinrichtung, z.B. in Form einer Ausnehmung, ausgebildet, in welcher formschlüssig ein Verbindungselement zum Verbinden von zwei Strukturplatten eingreifen kann.

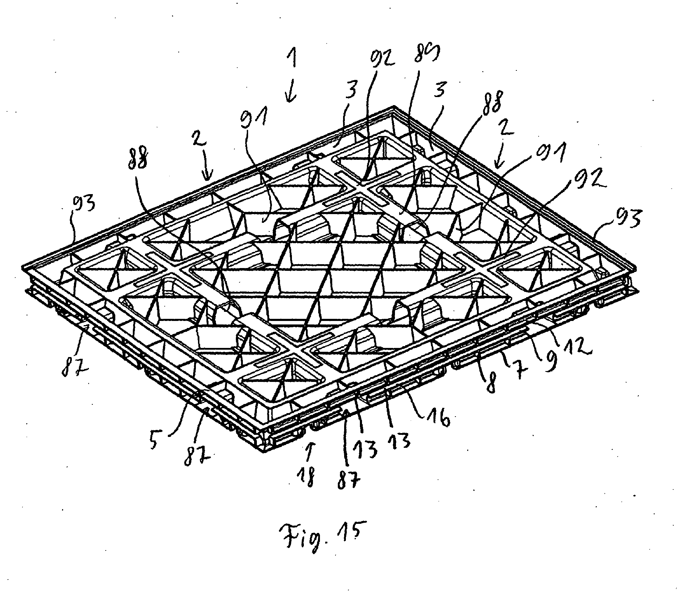

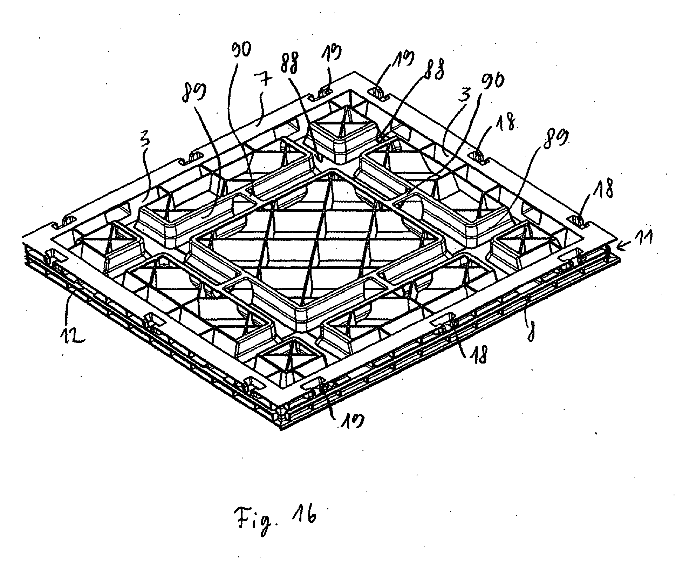

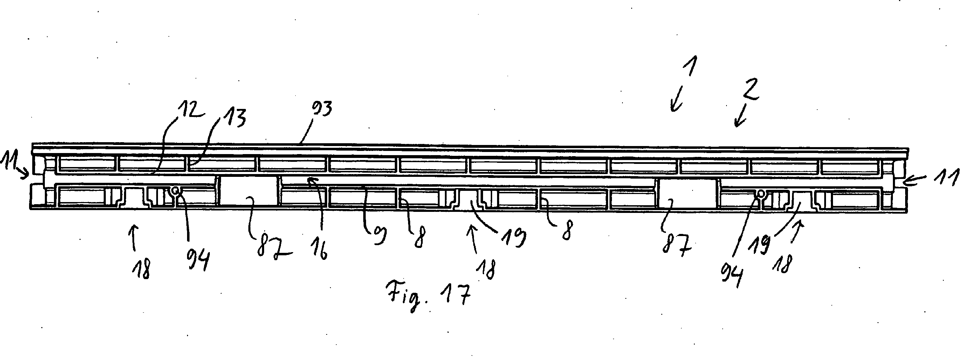

Ein zweites Ausführungsbeispiel einer erfindungsgemäßen Strukturplatte ist in den Figuren 15 bis 17 dargestellt. Gleiche Teile wie im ersten Ausführungsbeispiel sind mit gleichen Bezugszeichen versehen.

Auch diese Strukturplatte 1 ist flach, plattenartig ausgebildet und weist profilierte, umlaufende Rahmenelemente 2 auf. Das Rahmenelement 2 ist wiederum aus einer im wesentlichen vertikal verlaufenden Rahmenwandung 3 und einer oberen Deckenwandung 5 und unteren Bodenwandung 7 ausgebildet, die sich jeweils senkrecht zur Rahmenwandung 3 erstrecken. Auch das Rahmenelement des zweiten Ausführungsbeispiels ist in ähnlicher Weise wie das Rahmenelement des ersten Ausführungsbeispiels mit Profilstegen 8, einer unteren Profilquerwandung 9, freigesparten Eckbereichen 11, einer oberen Profilquerwandung 12, oberen Profilstiegen 13 ausgebildet. Die untere Profilquerwandung 9 und die obere Profilquerwandung 12 begrenzen zwischen sich einen Schlitz 16, der Teil einer L-förmigen Nivelliemut ist.

An den Rahmenelementen 2 sind pro Außenkante jeweils wiederum drei Verbindungsaufnahmeeinrichtungen 18 in Form von T-förmigen Einstecköffnungen 19 vorgesehen. Diese Einstecköffnungen 19 sind im wesentlichen sehr ähnlich zu den entsprechenden Einstecköffnungen der Strukturplatte nach dem ersten Ausführungsbeispiel ausgebildet. Sie unterscheiden sich lediglich in der Querschnittsform der torartigen Öffnungen 21, die bodenseitig und beidseitig jeweils eine Ausbuchtung aufweisen. Im übrigen sind die Einstecköffnungen 19 identisch zu den Einstecköffnungen 19 des ersten Ausführungsbeispiels. Auch hier werden die entsprechenden Verbindungselemente 54 formschlüssig aufgenommen. Beim Einfügen eines Verbindungselements in eine Einstecköffnung 19 wird das Verbindungselement in die Einstecköffnung 19 geklemmt, so dass die Strukturplatte mit den eingefügten Verbindungselementen 54 als Einheit gehandhabt werden kann.

Ein wesentlicher Unterschied des Rahmenelements 2 des zweiten Ausführungsbeispiels gegenüber dem ersten Ausführungsbeispiel liegt darin, dass das Rahmenelement 2 jeweils zwei Durchgangsöffnungen 87 aufweist, die jeweils in einem Kanal 88 münden, der sich über die gesamte Strukturplatte erstreckt und an dem gegenüberliegenden Rahmenelement in einer korrespondierenden Durchgangsöffnung 87 mündet. Bei dieser quadratischen Strukturplatte sind somit vier Kanäle 88 ausgebildet, die sich paarweise kreuzen. Die Durchgangsöffnungen 87 sind nach unten hin durch die jeweilige Bodenwandung 7 begrenzt und erstrecken sich nach oben bis zur oberen Profilquerwandung 12. Die Durchgangsöffnungen 87 erstrecken sich somit bis in den Bereich der Nivelliemut 24 hinein. Die seitlichen Begrenzungswandungen der Durchgangsöffnung 87 sind jedoch derart ausgebildet, dass sie sich nicht in die Nivelliemut 24 hinein erstrecken und nicht das Einfügen eines Nivellierprofils behindern. Zwischen zwei aneinander stoßenden Strukturplatten wird die Mündung des Kanals jeweils durch das Nivellierprofil nach oben hin begrenzt. Am Randbereich eines Verbunds von Strukturplatten steht jedoch die vollständige Durchgangsöffnung zur Verfügung. Deshalb ist es möglich, am Randbereich weitere Elemente an die Strukturplatte anzukoppeln, die mit einer entsprechenden Stange formschlüssig in den Kanälen 88 aufgenommen werden. Derartige Elemente sind z.B. vertikal stehende Seitenwandungen.

Die Kanäle 88 selbst sind großteils durch eine sich nach oben wölbende Kanalwandung 89 begrenzt. Lediglich im Bereich der Längsmitte der Kanäle 88 ist die Kanalwandung 89 unterbrochen und es ist jeweils ein quer verlaufender Bodensteg 90 vorgesehen.

In den Bereichen zwischen den Kanälen 88 und den Kanälen 88 und dem Rahmenelement 2 sind Versteifungsstege 91 ausgebildet, die rautenförmig angeordnet sind. Im Rahmen der Erfindung ist es möglich, beliebige Versteifungsstrukturen vorzusehen, solange sie die notwendige Festigkeit zur Stützung eines darüber angeordneten Bodenbelages (nicht dargestellt) besitzen.

An den Kreuzungsbereichen der Kanäle sind an der Oberseite der Kanalwandungen 89 flache Klebeausnehmungen 92 vorgesehen, die zum Aufnehmen von Kleber dienen, mit dem ein Bodenbelag an die Strukturplatte geklebt wird. Durch das Vorsehen der Klebeausnehmungen 92 wird eine Klebeschicht mit bestimmter Dicke erzielt. Im vorliegenden Ausführungsbeispiel sind die Klebeausnehmungen 92 in der Draufsicht kreuzförmig auf den sich kreuzenden Kanalwandungen 89 ausgebildet.

Die Strukturplatten 1 nach dem zweiten Ausführungsbeispiel weisen an zwei sich angrenzenden Außenkanten jeweils einen am Rand der Deckenwandung 5 nach oben vorstehenden Keder 93 auf. Dieser Keder ist einstückig mit der übrigen Strukturplatte aus dem gleichen Material ausgeformt. Diese Strukturplatten werden zu Fliesen von je vier Strukturplatten derart zusammengesetzt, dass die Keder 93 die Fliesen umlaufend vollständig begrenzen. Auf der Oberseite der Strukturplatte im Bereich innerhalb der Keder 93 kann grundsätzlich ein jeder beliebiger Bodenbelag vorgesehen sein. Wird eine großflächige, steife Platte vorgesehen, die die gesamte Fliese abdeckt, wie z.B. eine Glasplatte, und wird diese mit den jeweiligen Strukturplatten verklebt, dann ist es aufgrund der Steifigkeit des Bodenbelags nicht notwendig, zwischen den Strukturplatten der Fliese Nivellierprofile vorzusehen. Hier genügt es, wenn zwischen den einzelnen Fliesen Nivellierprofile angeordnet werden. Bei dem vorliegenden Ausführungsbeispiel weist die quadratische Strukturplatte eine Kantenlänge von 50 cm auf, so dass eine aus vier Strukturplatten gebildet Fliese eine Kantenlänge von 1 m besitzt. Zwischen benachbarten Fliesen werden Nivellierprofile mit einer Länge von einem knappen Meter eingefügt.

Es hat sich gezeigt, dass bei dieser Verbindungsstruktur ein schubfester Verbund geschaffen wird, der selbst bei starker lokaler Belastung, wie sie z.B. beim Auffahren eines Kraftfahrzeugs oder beim Aufstellen schwerer Möbel auftritt, nicht dazu führt, dass einzelne Strukturplatten bzw. Fliesen zu benachbarten Strukturplatten bzw. zu benachbarten Fliesen vertikal oder seitlich versetzt werden. In Verbindung mit einer rutschfesten Unterlage oder einer rutschfesten Beschichtung, die vorzugsweise an der Unterseite der Verbindungselemente angeordnet ist, wird zudem sichergestellt, dass dieser Verbund selbst bei kurzfristigen horizontal gerichteten Kräften, wie sie z.B. beim Anfahren eines Kraftfahrzeugs entstehen, nicht verrutscht oder aufgetrennt wird, wie es bei herkömmlichen Strukturplatten der Fall ist.

Durch die Ausbildung der Kanäle 88 in den Strukturplatten können diese auch als Unterbau für sogenannte Systemböden verwendet werden, wie sie in Büros gefordert werden, da Kabel oder sonstige Leitungen durch die Kanäle 88 verlegt werden können. Hierdurch wird eine Bodenstruktur geschaffen, die eine schnelle Änderung der Struktur der verlegten Kabel ermöglicht, da lediglich die Strukturplatten bzw. Fliesen angehoben werden müssen und die Kabel neu eingezogen werden können. Dies ist für Büroflächen zweckmäßig in welchen häufig die Benutzung wechselt.

Die Kanäle können auch dahingehend abgewandelt werden, dass sie zur Aufnahme von Schläuchen einer Bodenheizung ausgebildet sind, die dann lediglich in die Kanäle eingeklippst werden. Derartige Kanäle sind vorzugsweise nach oben offen ausgebildet.

An einigen zwischen der Bodenwandung 7 und der unteren Profilwandung 9 angeordneten Profilstegen 8 sind Anschraubpunkte 94 ausgebildet, an welchen beispielsweise ein Profil angeschraubt werden kann.

Bei Verwendung der Strukturplatte als Systemboden kann es zweckmäßig sein, keinen Keder vorzusehen, so dass ein sich über viele Strukturplatten erstreckender Belag darauf angeklebt werden kann.

### Bezugszeichenliste

- 1: Strukturplatte
- 2: Rahmenelement
- 3: Rahmenwandung
- 4: obere Längskante
- 5: Deckenwandung
- 6: untere Längskante
- 7: Bodenwandung
- 8: Profilstege
- 9: untere Profilquerwandung
- 10: Ecke von 3
- 11: Eckbereiche von 1
- 12: obere Profilquerwandung
- 13: Profilstege
- 14: untere Gefache
- 15: obere Gefache
- 16: Schlitz
- 17: Außenkante von 5
- 18: Verbindungsaufnahmeeinrichtung
- 19: Einstecköffnung
- 20: Hauben
- 21: Öffnung
- 22: Stege
- 23: GummikederKeder
- 24: Längsnut
- 25: Tragstruktur
- 27: untere Ringkante
- 28: Bodenwandung
- 29: Mantelwandung
- 30: obere Ringkante
- 31: Deckenwandung
- 34: Tragsteg
- 35: obere Längskante
- 36: untere Längskante
- 37: obere Tragflächen
- 38: untere Tragflächen
- 39: Querkanten
- 40: Verbindungsstege
- 41: Längskante
- 44: Ringsteg
- 45: Ringwandung
- 46: Deckenwandung
- 49: Kreissegmentsteg
- 52: T-förmige Nut
- 54: Verbindungselemente
- 55: Bodenwandung
- 56: Seitenwandung
- 57: Deckenwandung
- 58: Längssteg
- 59: Quersteg
- 60: Außenkante
- 61: Außenkante
- 62: rutschhemmende Schicht
- 63: zylindrische Ausnehmung
- 64: langlochförmige Ausnehmung
- 68: Randelemente
- 69: Bodenwandung
- 70: Seitenwandung
- 71: untere Längskante
- 72: obere Längskante
- 73: Profilwandung
- 75: Bodenbelag
- 76: Zwischenschicht/Klebstoffschicht
- 78: Wandelement
- 79: Bodenwandung
- 80: Außenwandung
- 81: Innenwandung
- 82: Nut
- 83: Ausnehmung
- 84: Ausnehmung
- 85: Einzugsfläche
- 86: Gegeneinzugsfläche
- 87: Durchgangsöffnung
- 88: Kanal
- 89: Kanalwandung
- 90: Bodensteg
- 91: Versteifungssteg
- 92: Klebeausnehmung
- 93: Keder
- 94: Anschraubpunkt

## Patentansprüche

1. Strukturplatte (1) zur Ausbildung von Fliesen und/oder Podesten aus Kunststoff zur Aufnahme eines Bodenbelags an der Oberseite der Strukturplatte (1) mit einem an allen Außenkanten umlaufenden Rahmenelement (2) und einer von dem Rahmenelement (2) umfassten Tragstruktur (25), wobei das Rahmenelement (2) nach außen weisend eine Nivelliernut (24) zur Aufnahme eines Nivellierprofils aufweist und an allen Außenkanten zumindest jeweils eine Verbindungsautnahmeeinrichtung (18) für separat von der Strukturplatte ausgebildete Verbindungselemente (54) vorhanden ist, **dadurch gekennzeichnet, dass** die Nivelliernut (24) und die Verbindungsaufnahmeeinrichtungen (18) vertikal versetzt übereinander in zwei Ebenen angeordnet sind, so dass sie sich nicht kreuzen.

2. Strukturplatte nach Anspruch 1,
**dadurch gekennzeichnet,**
**dass** die Verbindungsaufnahmeeinrichtung (18) als Ausnehmung im Rahmenelement (2) ausgebildet ist, die einen hinterschnittenen Bereich aufweist, so dass ein Verbindungselement (54) formschlüssig in der Ausnehmung eingreifen kann, und
die Verbindungsaufnahmeeinrichtung (18) eine an der Unterseite der Strukturplatte offene Ausnehmung ist, so dass ein Verbindungselement von der Unterseite in das Rahmenelement (2) einbringbar ist.

3. Strukturplatte nach eine Anspruch 1 oder 2,
**dadurch gekennzeichnet,**
**dass** die Längsnut (24) rechteckförmig, rund oder L-förmig ausgebildet ist.

4. Strukturplatte nach einem der Ansprüche 1 bis 3,
**dadurch gekennzeichnet,**
**dass** die Verbindungsaufnahmeeinrichtung einen sich von einer Bodenwandung (7) des Rahmenelements (2) nach oben zu einer Deckenwandung (5) hin erstreckenden ersten Bereich (20) der zumindest eine parallel zur Außenkante und gegenüber der Vertikalen etwas schräg verlaufende Einzugsfläche (85) aufweist und einen zweiten Bereich (21) besitzt, der von dem ersten Bereich (20) nach außen mündet

5. Strukturplatte nach einem der Ansprüche 1 bis 4,
**dadurch gekennzeichnet,**
**dass** das Rahmenelement (2) eine vertikal angeordnete Rahmenwandung (3) aufweist, von der sich nach außen eine untere Profilquerwandung (9) erstreckt, die die Nivelliernut (24) nach unten hin begrenzt,
wobei zwischen einer Bodenwandung (7) des Rahmenelements (2) und der Profilquerwandung (9) vertikal stehende Profilstege (8) angeordnet sind, und die Profilstege (8), die untere Profilquerwandung (9) und die Rahmenwandung (3) ein unteres, nach außen weisendes Gefache (14) bildet, und
an der Rahmenwandung (3) eine obere Profilquerwandung (12) angeordnet ist, die die Nivelliernut (24) nach oben hin begrenzt, wobei zwischen einer Deckenwandung (5) des Rahmenelements (2) und der oberen Profilquerwandung (12) vertikal verlaufende Profilstege (8, 13) vorgesehen sind, und die Rahmenwandung (3), die obere Profilquerwandung (12) und die oberen Profilstege (13) ein oberes, nach außen weisendes Gefache (15) bilden.

6. Strukturplatte nach Anspruch 5,
**dadurch gekennzeichnet,**
**dass** das obere Gefache (15) gegenüber dem unteren Gefache (14) etwas zurückversetzt ist, so dass ein Freiraum für eine L-förmige Nivelliemut (24) ausgebildet ist, und die Enden in Längsrichtung der unteren und oberen Gefache (14,15) ein Stück beabstandet von Ecken (10) der Rahmenwandungen (3) ausgebildet sind, so dass Eckbereiche (11) der Strukturplatte (1) von den Gefachen (14, 15) freigespart sind.

7. Strukturplatte nach einem der Ansprüche 1 bis 6,
**dadurch gekennzeichnet,**
**dass** die Strukturplatte ein Spritzgussteil ist, das vorzugsweise aus einem Thermoplast ausgebildet ist.

8. Strukturplatte nach einem der Ansprüche 1 bis 7,
**dadurch gekennzeichnet,**
**dass** am oberen, äußeren Randbereich der Strukturplatte zumindest im Bereich einer Außenkante ein vertikal nach oben vorstehender Keder (23, 93) ausgebildet ist.

9. Strukturplatte nach einem der Ansprüche 1 bis 8,
**dadurch gekennzeichnet,**
**dass** in der Strukturplatte (1) ein sich zwischen zwei gegenüberliegenden Rahmenelementen (2) erstreckender Kanal (88) ausgebildet ist, der jeweils in einer in den Rahmenelementen (2) ausgebildeten Durchgangsöffnung (87) mündet.

10. Verbindungselement (54) zur Verbindung von Strukturplatten (1) nach einem der vorhergehenden Ansprüche,
wobei das Verbindungselement (54) einen Quersteg (59) zum Überbrücken einer Stoßfuge (53) zweier aneinander stoßender Strukturplatten (1) besitzt und zwei diametral gegenüberliegende Eingriffsmittel (58) zum Eingriff in die ersten Bereiche (20) der Strukturplatten (1), um die Strukturplatten (1) aneinander zu halten, wobei an der Unterseite des Verbindungselementes (54) eine rutschhemmende Schicht (62) angeordnet ist.

11. Verbindungselement nach Anspruch 10 zur Verbindung von Strukturplatten nach
einem der Ansprüche 4 bis 9,
**dadurch gekennzeichnet,**
**dass** die Eingriffsmittel (58) eine zur Stoßfuge (53) weisende Gegeneinzugsfläche (86) aufweisen, die entsprechend der korrespondierenden Einzugsfläche (85) der Strukturplatte (1) gegenüber der Vertikalen geneigt ist,
so dass bei Belastung der Strukturplatte aufgrund des in Kontakt stehenden Einzugs- und Gegeneinzugsflächen (85, 86) die verbundenen Strukturplatten (1) zusammen gezogen werden.

12. Verbindungselement nach Anspruch 10 oder 11,
**dadurch gekennzeichnet,**
**dass** das Verbindungselement formschlüssig eingreifend in die Verbindungsaufnahmeeinrichtung (18) der Strukturplatte (1) ausgebildet ist.

13. Nivellierprofil zur Verwendung in einer Fliese aus einer Mehrzahl von aneinander angeordneten Strukturplatten (1) nach einem der Ansprüche 1 bis 13,
**dadurch gekennzeichnet,**
**dass** das Nivellierprofil eine Außenkontur besitzt, die der Kontur der zusammengesetzten Nut (53) aus zwei korrespondierenden Nivelliernuten (24) entspricht, wobei das Nivellierprofil vorzugsweise mit einer Toleranz von maximal 0,1 mm bezüglich der zusammengesetzten Nut (53) ausgebildet ist.

14. Fliese aus zumindest zwei Strukturplatten (1) nach einem der Ansprüche 1 bis 9, die mit Verbindungselementen nach einem der Ansprüche 10 bis 12 und Nivellierprofilen nach Anspruch 13 verbunden sind.

15. Fliese nach Anspruch 14.
**dadurch gekennzeichnet,**
**dass** umlaufend an einer äußeren umlaufenden Kante der Fliese ein Randprofil (68) angeordnet ist, welches die Fliese nach außen abschließt und über Eingriffsmittel (58) verfügt, die mit den Nuten (24) der Rahmenelemente (2) und/oder den Verbindungsaufnahmeeinrichtungen (18) korrespondiert, wobei im Bereich einer umlaufenden oberen Außenkante der Fliese und/oder der Strukturplatten (1) ein Keder (23) einstückig angeordnet ist, der sich fluchtend mit der Außenkante nach oben erstreckt, wobei innerhalb der von den Kedern (23) begrenzten Fläche ein Bodenbelag angeordnet ist.

16. Fliese nach Anspruch 14 oder 15
aus zumindest zwei Strukturplatten (1),
**dadurch gekennzeichnet,**
**dass** an zumindest einer äußeren Kante der Fliese ein Wandelement (78) angeordnet ist, welches die Fliese nach außen abschließt und über Eingriffsmittel (58) zum Eingreifen in die Strukturplatte (1) verfügt.

## Claims

1. Structured plate (1) to form tiles and/or platforms of plastic to receive a floor covering on the top of the structured plate (1), with a frame element (2) running round all outer edges and a bearing structure (25) comprising the frame element (2), wherein the frame element (2) has an outwards-facing levelling slot (24) to accommodate a levelling extruded profile, and at all outer edges has in each case at least one connection mounting fixture (18) for connecting elements (54) which are separate from the structured plate, **characterised in that** the levelling slot (24) and the connection mounting fixtures (18) are vertically offset on two levels, one above the other, so that they do not intersect.

2. Structured plate according to claim 1,
**characterised in that**
the connection mounting fixture (18) is in the form of a recess in the frame element (2) which has an undercut area so that a connecting element (54) may engage positively in the recess, and the connection mounting fixture (18) is an open recess on the bottom of the structured plate, so that a connecting element may be inserted into the frame element (2) from below.

3. Structured plate according to claim 1 or 2,
**characterised in that**
the longitudinal slot (24) is rectangular, round or L-shaped.

4. Structured plate according to any of claims 1 to 3,
**characterised in that**
the connection mounting fixture has a first section (20), extending upwards from a bottom (7) of the frame element (2) to a top (5), which has at least one feed-in surface (85) running parallel to the outer edge and at a slight angle to the vertical, and a second section (21) which opens outwards from the first section (20).

5. Structured plate according to any of claims 1 to 4
**characterised in that**
the frame element (2) has a vertical frame wall (3) from which a lower profile transverse wall (9) extends downwards and bounds the bottom of the levelling slot (24),
wherein vertical profile struts (8) are arranged between a bottom (7) of the frame element (2) and the lower profile transverse wall (9), and the profile struts (8), the lower profile transverse wall (9) and the frame wall (3) form an outwards-facing lower compartment (14), and at the frame wall (3) there is an upper profile transverse wall (12) which bounds the top of the levelling slot (24), wherein vertical profile struts (8, 13) run between a top (5) of the frame element (2) and the upper profile transverse wall (12), and the frame wall (3), the upper profile transverse wall (12) and the upper profile struts (13) form an outwards-facing upper compartment (15).

6. Structured plate according to claim 5,
**characterised in that**
the upper compartment (15) is set back a short distance from the lower compartment (14), so as to form a space for an L-shaped levelling slot (24), and the ends in the longitudinal direction of the lower and upper compartments (14, 15) are a short distance from the corners (10) of the frame walls (3), so that corner areas (11) of the structured plate (1) are kept free from the compartments (14, 15).

7. Structured plate according to any of claims 1 to 6,
**characterised in that**
the structured plate is an injection-moulded part, preferably made of a thermoplastic.

8. Structured plate according to any of claims 1 to 7,
**characterised in that**
a vertical, upwards-extending sealing strip (23, 93) is formed on the upper, outer edge area of the structured plate, at least in the area of one outer edge.

9. Structured plate according to any of claims 1 to 8,
**characterised in that**
there is formed in the structured plate (1) a channel (88) extending between two opposite frame elements (2) and leading in each case into a through hole (87) made in the frame elements (2).

10. Connecting element (54) for the connection of structured plates (1) according to any of the preceding claims,
wherein the connecting element (54) has a cross-strut (59) to bridge a butt joint (53) between two abutting structured plates (1) and two diametrically opposite engagement means (58) for engaging in the first sections (20) of the structured plates (1), in order to hold the structured plates (1) together, wherein the bottom of the connecting element (54) is provided with an anti-slip coating (62).

11. Connecting element according to claim 10 for the connection of structured plates according to any of claims 4 to 9,
**characterised in that**
the engagement means (58) have a mating feed-in surface (86) which faces the butt joint (53) and is inclined relative to the vertical to match the corresponding feed-in surface (85) of the structured plate (1),
so that under loading of the structured plate, the connected structured plates (1) are drawn together because of the contact between the feed-in and mating feed-in surfaces (85, 86).

12. Connecting element according to claim 10 or 11,
**characterised in that**
the connecting element is designed to engage positively in the connection mounting fixture (18) of the structured plate (1).

13. Levelling extruded profile for use in a tile comprised of a multiplicity of structured plates (1) arranged next to each other, according to any of claims 1 to 13,
**characterised in that**
the levelling extruded profile has an external contour which matches the contour of the slot (53) comprised of two corresponding levelling slots (24), wherein the levelling extruded profile is preferably designed with a maximum tolerance of 0.1 mm relative to the assembled slot (53).

14. Tile of at least two structured plates (1) according to any of claims 1 to 9 which are connected by connecting elements according to any of claims 10 to 12 and levelling extruded profiles according to claim 13.

15. Tile according to claim 14
**characterised in that**
there is provided running around an outer continuous edge of the tile an edge profile section (68) which seals the tile towards the outside and has engagements means (58) which correspond with the slots (24) of the frame elements (2) and/or the connection mounting fixtures (18), wherein in the area of a continuous upper outer edge of the tile and/or the structured plates (1) there is an integral sealing strip (23) which extends upwards flush with the outer edges, wherein a floor covering is laid within the surface bounded by the sealing strips (23).

16. Tile according to claim 14 or 15
of at least two structured plates (1),
**characterised in that**
a wall element (78) is provided on at least one outer edge of the tile and seals the tile towards the outside and has engagement means (8) to engage in the structured plate (1).

## Revendications

1. Plaque structurée (1) pour la réalisation de dalles et/ou de plates-formes en matière plastique pour la réception d'un revêtement de sol à la face supérieure de la plaque structurée (1), comprenant un élément de cadre (2) sur la périphérie de toutes les arêtes extérieures, et une structure porteuse (25) enchâssée par l'élément de cadre (2), dans laquelle l'élément de cadre (2) comporte une gorge de mise à niveau (24), tournée vers l'extérieur, pour la réception d'un profil de mise à niveau, et il est prévu sur toutes les arêtes extérieures au moins un moyen de réception de jonction (18) respectif pour des éléments de jonction (54) réalisés séparément de la plaque structurée,
**caractérisée en ce que** la gorge de mise à niveau (24) et les moyens de réception de jonction (18) sont agencés dans deux plans et en décalage vertical les uns au-dessus des autres, de sorte qu'ils ne se croisent pas.

2. Plaque structurée selon la revendication 1,
**caractérisée en ce que** le moyen de réception de jonction (18) est réalisé sous la forme d'un évidement dans l'élément de cadre (2), lequel comporte une région en contre-dépouille, de sorte qu'un élément de jonction (54) peut s'engager dans l'évidement à coopération de formes, et le moyen de réception de jonction (18) est un évidement ouvert à la face intérieure de la plaque structurée, de sorte qu'un élément de jonction peut être introduit dans l'élément de cadre (2) depuis la face inférieure.

3. Plaque structurée selon l'une ou l'autre des revendications 1 ou 2,
**caractérisée en ce que** la gorge longitudinale (24) est réalisée sous forme rectangulaire, arrondie ou en forme de L.

4. Plaque structurée selon l'une des revendications 1 à 3,
**caractérisée en ce que** le moyen de réception de jonction comporte une première région (20), qui s'étend depuis une paroi de fond (7) de l'élément de cadre (2) vers le haut jusqu'à une paroi de couverture (5), et qui comporte au moins une surface d'introduction (25) s'étendant parallèlement à l'arête extérieure et légèrement en oblique par rapport à la verticale, et une seconde région (21) qui débouche vers l'extérieur depuis la première région (20).

5. Plaque structurée selon l'une des revendications 1 à 4,
**caractérisée en ce que** l'élément de cadre (2) comprend une paroi de cadre (3) disposée verticalement, depuis laquelle une paroi profilée transversale inférieure (9) s'étend vers l'extérieur, laquelle délimite la gorge de mise à niveau (24) vers le bas,
dans laquelle des barrettes profilées verticales sont agencées entre la paroi de fond (7) de l'élément de cadre (2) et la paroi de profilé transversal (9), et les barrettes profilées (8), la paroi profilée transversale inférieure (9) et la paroi de cadre (3) forment un croisillon inférieur (14) tourné vers l'extérieur, et
une paroi profilée transversale supérieure (17) est agencée sur la paroi de cadre (3), qui délimite la gorge de mise à niveau (24) vers le haut, et des barrettes profilées (8, 13) verticales sont prévues entre une paroi de couverture (5) de l'élément de cadre (2) et la paroi profilée transversale supérieure (12), et la paroi de cadre (3), la paroi profilée transversale supérieure (12) et les barrettes profilées supérieures (13) forment un croisillon supérieur (15) tourné vers l'extérieur,

6. Plaque structurée selon la revendication 5,
**caractérisée en ce que** le casier supérieur (15) est légèrement en retrait par rapport au casier inférieur (14), de sorte qu'il se forme un espace libre pour une gorge de mise à niveau (24) en forme de L, et les extrémités, en direction longitudinale du croisillon inférieur et du croisillon supérieur (14, 15) sont réalisées légèrement écartées des coins (10) des parois de cadre (3), de sorte que les régions de coin (11) de la plaque structurée (1) sont dégagées vis-à-vis des croisillons (14, 15).

7. Plaque structurée selon l'une des revendications 1 à 6,
**caractérisée en ce que** la plaque structurée est une pièce moulée par injection, qui est réalisée de préférence en une matière thermoplastique.

8. Plaque structurée selon l'une des revendications 1 à 7,
**caractérisée en ce qu'**un renflement (23, 93) dépassant verticalement vers le haut est réalisé au niveau de la région de bordure supérieure extérieure de la plaque structurée et au moins dans la zone d'une arête extérieure.

9. Plaque structurée selon l'une des revendications 1 à 8,
**caractérisée en ce qu'**un canal (88) s'étendant entre deux éléments de cadre (2) mutuellement opposés est réalisé dans la plaque structurée (1), lequel débouche respectivement dans une ouverture traversante (87) réalisée dans les éléments de cadre (2).

10. Élément de jonction (54) pour la jonction de plaque structurée (1) selon l'une des revendications précédentes,
dans lequel l'élément de jonction (54) possède une barrette transversale (59) pour combler une jointure d'aboutement (53) de plaques structurées (1) en aboutement l'une contre l'autre, et deux organes d'engagement (58) diamétralement opposés pour l'engagement dans les premières régions (20) des plaques structurées (1), afin de maintenir les plaques structurées (1) les unes contre les autres, et une couche (62) s'opposant au glissement est agencée sur la face inférieure de l'élément de jonction (54).

11. Élément de jonction selon la revendication 10 pour la jonction de plaques structurées selon l'une des revendications 4 à 9,
**caractérisé en ce que** les moyens d'engagement (58) comportent une surface d'introduction antagoniste (86) tournée vers la jointure d'aboutement (53), surface qui est inclinée par rapport à la verticale en correspondance de la surface d'introduction correspondante (85) de la plaque structurée (1),
de sorte que lors d'un chargement de la plaque structurée, les plaques structurées jointes (1) sont tirées en rapprochement en raison des surfaces d'introduction et des surfaces d'introduction antagonistes (85, 86) qui se trouvent en contact.

12. Élément de jonction selon la revendication 10 ou 11,
**caractérisé en ce que** l'élément de jonction est réalisé de manière à s'engager à coopération de formes dans le moyen de réception de jonction (18) de la plaque structurée (1).

13. Profilé de mise à niveau pour l'utilisation dans une dalle formée d'une pluralité de plaques structurées (1) selon l'une des revendications 1 à 13, agencées les unes à côté des autres,
**caractérisé en ce que** le profilé de mise à niveau possède un contour extérieur qui correspond au contour de la gorge (53) composée par deux gorges de mise à niveau correspondantes (24), et le profilé de mise à niveau est réalisé de préférence avec une tolérance maximum de 0,1 mm pour ce qui concerne la gorge composée (53).

14. Dalle formée d'au moins deux plaques structurées (1) selon l'une des revendications 1 à 9, qui sont reliées avec des éléments de jonction selon l'une des revendications 10 à 12 et des profilés de mise à niveau selon la revendication 13.

15. Dalle selon la revendication 14,
**caractérisée en ce qu'**un profilé de bordure (68) est agencé en périphérie au niveau d'une arête périphérique extérieure de la dalle, lequel termine la dalle vers l'extérieur et dispose de moyens d'engagement (58) qui correspondent avec les gorges (24) des éléments de cadre (2) et/ou les moyens de réception de jonction (18), dans laquelle un renflement (23) est agencé d'un seul tenant dans la région de l'arête extérieure supérieure périphérique de la dalle et/ou des plaques structurées (1), lequel s'étend vers le haut en affleurement avec l'arête extérieure, et un revêtement de sol est agencé à l'intérieur de la surface délimitée par les renflements (23).

16. Dalle selon la revendication 14 ou 15, formée d'au moins deux plaques structurées (1), **caractérisée en ce qu'**un élément de paroi (78) est agencé à au moins une arête extérieure de la dalle, lequel termine la dalle vers l'extérieur et dispose de moyens d'engagement (58) pour s'engager dans la plaque structurée (1).
